# FASCICULE DE BREVET EUROPEEN

(11) **EP 1 481 755 B1**
(45) Date de publication et mention de la délivrance du brevet: **08.04.2009**
(21) Numéro de dépôt: 04102296.3
(22) Date de dépôt: 25.05.2004
(51) Int. Cl.: B23P 15/04, F01D 5/14, F01D 5/18, B21D 26/02

(54) **Procédé de fabrication d'une aube creuse pour turbomachine**
Verfahren zur Herstellung einer hohlen Schaufel für Strömungsmaschine
Method for manufacturing a hollow blade for turbomachine

(30) Priorité: 27.05.2003 FR 0350185
(43) Date de publication de la demande: 01.12.2004
(73) Titulaire: SNECMA, 75015 Paris (FR)
(72) Inventeur: Ferte, Jean-Pierre, 91100 Corbeil Essones (FR); Franchet, Jean-Michel Patrick Maurice, 75018 Paris (FR); Lhomme, Daniel Gaston, 95550 Bessancourt (FR); Lorieux, Alain, 95110 Sannois (FR)
(74) Mandataire: Poulin, Gérard

(56) Documents cités:
- EP-A- 1 188 497
- EP-A- 1 245 325
- FR-A- 970 578
- GB-A- 574 440
- US-A- 2 767 460
- US-A- 3 982 854
- US-A- 4 882 823

## Description

### DOMAINE TECHNIQUE

La présente invention concerne un procédé de fabrication d'une aube creusepour turbomachine selon le préambule de la revendication 1. Un tel procédé est décrit dans le document EP-A-1188497.

### ETAT DE LA TECHNIQUE ANTERIEURE

Habituellement, une aube creuse de soufflante pour turbomachine comprend un pied d'épaisseur relativement importante servant à la fixation de cette aube dans un disque de rotor, ce pied étant prolongé radialement vers l'extérieur par une partie aérodynamique fine, appelée pale de l'aube.

De l'art antérieur, on connaît un procédé de fabrication d'une telle aube creuse, basé principalement sur l'utilisation de la technique de soudage par diffusion, associée à celle de formage superplastique.

En effet, dans ce procédé de l'art antérieur, deux ou trois pièces constitutives de l'aube sont d'abord définies, puis fabriquées séparément avant d'être superposées et assemblées entre elles à l'aide de la technique de soudage par diffusion, dans le but d'obtenir une préforme de l'aube désirée.

Par la suite, il est procédé à une mise au profil aérodynamique de la préforme préalablement fabriquée, puis à un gonflage par pression gazeuse et à un formage superplastique de cette préforme, afin d'aboutir à une aube présentant sensiblement sa forme finale.

Comme cela a été évoqué ci-dessus, une étape de réalisation de la préforme d'aube requiert la fabrication de deux pièces externes, et éventuellement d'une pièce centrale destinée à être interposée entre ces deux pièces externes, dans le but de remplir ultérieurement une fonction de raidisseur.

La fabrication des pièces externes s'effectue typiquement par usinage d'éléments d'approvisionnement disposant nécessairement de dimensions initiales relativement importantes, dans la mesure où chacune des deux pièces externes usinées doit présenter deux portions radialement opposées d'épaisseurs significativement différentes, ces portions servant respectivement à définir la partie pied de la préforme d'aube et la partie pale de cette même préforme.

Ainsi, la fabrication des pièces externes destinées à constituer au moins partiellement la préforme d'aube, par exemple obtenues par laminage, génère des coûts de matière et des coûts d'usinage extrêmement élevés, de sorte que ce procédé de fabrication de l'aube creuse n'est pas totalement optimisé.

Pour faire face à cet inconvénient majeur, il a été proposé de réaliser la préforme d'aube à l'aide d'une unique étape de soudage par diffusion impliquant une superposition d'au moins cinq pièces, dont certaines s'étendent radialement tout le long de la préforme, et d'autres uniquement au niveau de la partie pied de cette dernière.

Cependant, ce procédé qui est notamment décrit dans les documents US-A-4 882 823 et EP-A-1 188 197 présente l'inconvénient que des difficultés importantes de mise en oeuvre de la technique de soudage par diffusion apparaissent lorsque l'ensemble à souder dispose d'épaisseurs très variables (pied/pale), et d'un nombre important de pièces superposées.

De plus, des problèmes non négligeables sont également rencontrés pour assurer une bonne étanchéité au niveau de la partie pied de la superposition des pièces.

### EXPOSÉ DE L'INVENTION

L'invention a donc pour but de proposer un procédé de fabrication d'une aube creuse pour turbomachine, remédiant au moins partiellement aux inconvénients mentionnés ci-dessus relatifs au procédé mis en oeuvre dans l'art antérieur.

Plus précisément, le but de l'invention est de présenter un procédé de fabrication d'une aube creuse dont l'étape de réalisation de la préforme d'aube engendre des coûts de fabrication affaiblis de façon significative par rapport à ceux rencontrés dans l'art antérieur.

Pour ce faire, l'invention a donc pour objet un procédé de fabrication d'une aube creuse pour turbomachine comprenant un pied et une pale, le procédé comprenant une étape de réalisation d'une préforme d'aube disposant d'une partie pale et d'une partie pied, l'étape de réalisation de la préforme étant effectuée de façon à ce que celle-ci comporte un ensemble d'au moins deux pièces superposées et soudées entre-elles par diffusion. Selon l'invention, l'étape de réalisation de la préforme d'aube comprend les opérations suivantes :
- la fabrication de l'ensemble d'au moins deux pièces superposées et soudées entre-elles par diffusion, de manière à ce qu'il forme uniquement la partie pale de la préforme,
- la fabrication d'un élément additionnel destiné à former intégralement la partie pied de la préforme, et
- l'assemblage de l'élément additionnel sur l'ensemble afin d'obtenir la préforme d'aube.

Avantageusement, dans le procédé de fabrication selon l'invention, l'ensemble d'au moins deux pièces superposées et soudées entre-elles par diffusion n'est pas destiné à constituer l'intégralité de la préforme d'aube, mais seulement la partie pale de cette dernière.

Par conséquent, la fabrication de cet ensemble soudé par diffusion n'intègre plus la réalisation largement onéreuse de deux pièces externes chacune destinée à présenter deux portions d'épaisseurs significativement différentes et servant respectivement à définir la partie pied et la partie pale de la préforme d'aube. Au contraire, cet ensemble soudé ne constituant pas la partie pied de la préforme, ses deux pièces externes peuvent alors être judicieusement définies de sorte que chacune dispose d'une épaisseur relativement homogène, engendrant ainsi naturellement une réduction significative des coûts de fabrication, notamment en ce qui concerne les coûts de matière et les coûts d'usinage.

En outre, un autre avantage de l'invention réside dans le fait de ne pas intégrer la partie pied lors de l'étape de soudage par diffusion, ce qui permet de ne pas être confronté aux difficultés de mise en oeuvre de cette technique de soudage rencontrées lorsque l'ensemble à souder dispose d'épaisseurs très variables (pied/pale), et d'un nombre important de pièces superposées. En effet, l'ensemble soudé par diffusion étant prévu pour constituer uniquement la partie pale de la préforme, il peut par conséquent être facilement réalisé grâce à la superposition de deux ou trois pièces seulement, disposant chacune d'une épaisseur sensiblement homogène.

Par ailleurs, le fait de ne pas intégrer la partie pied lors de l'étape de soudage par diffusion permet de faciliter considérablement la réalisation de l'étanchéité entre les pièces superposées destinées à être soudées, cette étanchéité étant nécessaire pour la mise en oeuvre de la technique de soudage par diffusion. Effectivement, l'étanchéité au niveau de la partie pied de la superposition est connue de l'homme du métier pour être très difficile à réaliser, de sorte que le fait de ne pas avoir à s'en préoccuper constitue un réel avantage.

De plus, la fabrication séparée de l'élément additionnel offre la possibilité de réaliser toute sorte d'opération d'usinage intermédiaire sur cet élément, avant qu'il ne soit rapporté sur l'ensemble soudé par diffusion obtenu parallèlement.

D'autre part, l'élément additionnel n'étant pas destiné à entrer dans la constitution de la partie pale de la préforme d'aube mais uniquement à former intégralement la partie pied de cette même préforme, il est évident que les coûts de fabrication peuvent également être minimisés, notamment en raison de leur longueur radiale peu importante.

L'invention prévoit donc une réalisation de la préforme d'aube à l'aide d'une pluralité de parties préalablement fabriquées avant d'être assemblées, notamment par soudage par diffusion pour certaines d'entre-elles, et dont aucune de ces pièces ne s'étend sur toute la longueur radiale de la préforme, ce qui permet alors facilement de pallier les inconvénients directement liés à l'importante variation d'épaisseur de la préforme d'aube dans sa direction.

De préférence, l'opération d'assemblage de chaque élément additionnel sur l'ensemble est mise en oeuvre à l'aide d'une technique prise parmi le groupe constitué du soudage par friction linéaire, et du soudage par « friction stir welding », ces techniques étant préférées en ce sens qu'elles sont relativement faciles à mettre en oeuvre, fiables, peu coûteuses, et métallurgiquement peu destructrices.

Préférentiellement, l'étape de réalisation de la préforme d'aube est suivie des étapes suivantes :
- mise au profil aérodynamique de la préforme, et
- gonflage par pression gazeuse et formage superplastique de la préforme mise au profil aérodynamique.

On peut prévoir que l'élément additionnel destiné à former intégralement la partie pied de la préforme est réalisé par filage/extrusion, ce qui constitue un avantage particulièrement intéressant en termes de coûts de fabrication. Effectivement, cette technique peu onéreuse à mettre en oeuvre, consiste, à partir d'une billette de matière et au travers d'une filière appropriée, à réaliser un profil de l'élément additionnel disposant de la géométrie désirée.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'une aube creuse classique pour turbomachine,
- la figure 2 représente une vue schématique en perspective d'une préforme d'aube obtenue lors de la mise en oeuvre de l'étape de réalisation de la préforme du procédé de fabrication selon la présente invention, et
- les figures 3a à 3d illustrent schématiquement des étapes d'un mode de réalisation préféré du procédé de fabrication selon la présente invention.

### EXPOSÉ DÉTAILLÉ DE MODES DE RÉALISATION PRÉFÉRÉS

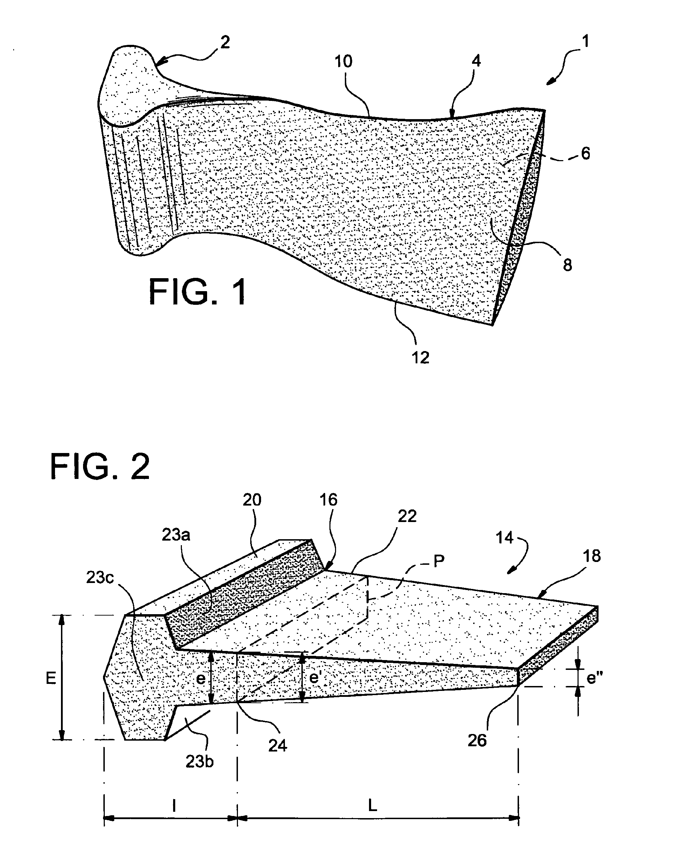

En référence à la figure 1, on peut apercevoir une aube creuse classique 1 pour turbomachine (non représentée), par exemple réalisée en titane ou dans l'un de ses alliages.

Cette aube creuse 1, du type aube de rotor de soufflante à grande corde, comporte un pied 2 prolongé par une pale 4 dans une direction radiale.

La pale 4, destinée à être placée dans la veine de circulation d'un flux d'air de la turbomachine, est munie de deux surfaces extérieures 6 et 8, respectivement appelées surface d'extrados 6 et surface d'intrados 8, raccordées par un bord d'attaque 10 et un bord de fuite 12.

La figure 2 représente une préforme d'aube 14, telle que celle destinée à être obtenue lors d'une étape de réalisation de la préforme d'aube du procédé de fabrication selon la présente invention.

Cette préforme 14 comporte une partie pied 16 d'épaisseur importante et variable, qui est prolongée dans une direction radiale par une partie pale 18. Comme on peut le voir sur cette figure 2, la partie pied 16 dispose d'une portion radiale interne 20 d'une épaisseur moyenne E élevée, cette portion 20 étant prolongée radialement extérieurement par une portion radiale externe 22 d'une épaisseur moyenne e plus faible que l'épaisseur moyenne E. Il est noté à titre indicatif que la portion radiale interne 20 est ultérieurement destinée à assurer la fixation de l'aube dans un disque de rotor de la turbomachine, notamment grâce à deux parties de projection 23a et 23b se situant de part et d'autre d'une partie centrale 23c agencée dans le prolongement de la portion radiale externe 22 de la partie pied 16.

En outre, la partie pale 18 de la préforme 14 dispose d'une extrémité radialement interne 24 d'une épaisseur e' sensiblement égale à l'épaisseur moyenne e, et d'une extrémité radialement externe 26 d'une épaisseur e" plus faible que l'épaisseur e'. Cependant, la partie pale 18 de la préforme 14 est d'épaisseur sensiblement homogène.

D'autre part, il est indiqué qu'il n'existe pas démarcation nette entre l'extrémité radialement interne 24 de la partie pale 18 et la portion radiale externe 22 de la partie pied 16 de la préforme 14, dans la mesure où ces éléments sont sensiblement continus. Néanmoins, un plan fictif de jonction P représenté schématiquement sur la figure 2 montre la séparation théorique communément reconnue entre la partie pied 16 et la partie pale 18 de la préforme 14.

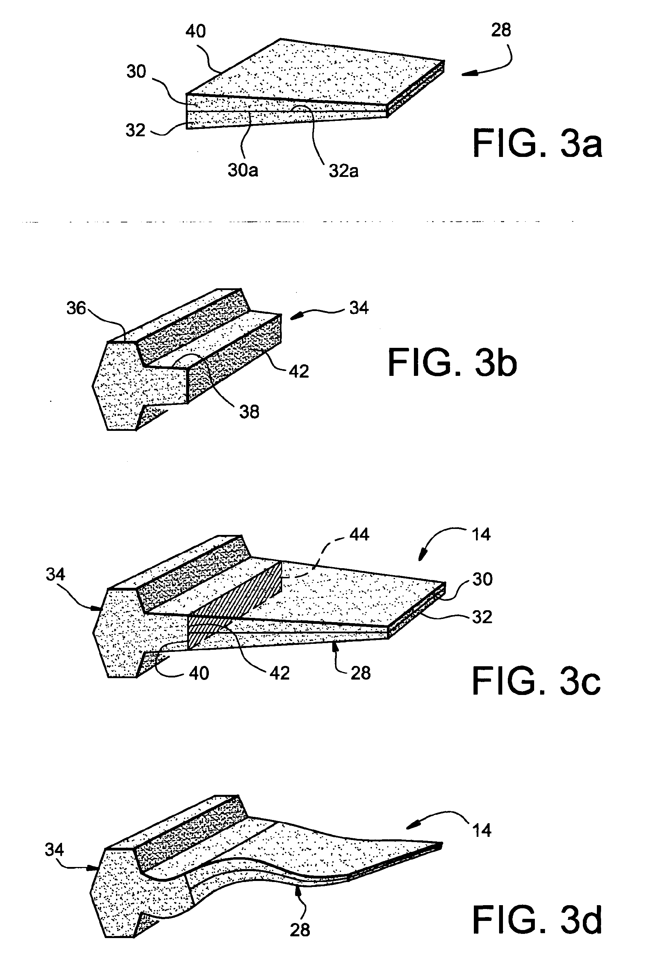

Dans un mode de réalisation préféré du procédé de fabrication selon la présente invention, une étape de réalisation de la préforme d'aube 14 est effectuée de la manière décrite ci-dessus, en faisant référence aux figures 3a à 3c.

Il est tout d'abord procédé à la fabrication d'un ensemble 28 d'au moins deux pièces 30 et 32 superposées et soudées entre-elles par diffusion, les deux seules pièces 30 et 32 visibles sur la figure 3a constituant respectivement les pièces externes supérieure et inférieure de l'ensemble 28. A ce titre, il est indiqué qu'une troisième pièce (non représentée) peut également être interposée entre les pièces externes 30 et 32, afin de constituer ultérieurement un raidisseur. En effet, l'ensemble 28 étant destiné à former uniquement et intégralement la partie pale 18 de la préforme 14, il peut alors être réalisé classiquement à l'aide de deux pièces externes identiques aux faces internes rainurées, ou encore à l'aide de trois pièces dont les deux pièces externes identiques disposent de surfaces internes sensiblement lisses en contact avec une troisième pièce intermédiaire.

Dans ce mode de réalisation préféré de la présente invention, l'ensemble 28 formant uniquement la partie pale 18 de la préforme 14 dispose d'une épaisseur sensiblement homogène, au même titre que les deux pièces externes identiques 30 et 32 constituant cet ensemble 28. Ainsi, la technique d'obtention des pièces 30 et 32 par laminage est donc particulièrement adaptée, et tout à fait optimisée en termes de coûts de matière et de coûts d'usinage, dans la mesure où les éléments d'approvisionnement nécessaires à la fabrication de ces pièces 30 et 32 peuvent facilement disposer de dimensions proches des dimensions finales que doivent présenter ces mêmes pièces 30 et 32.

Dans le cas où l'ensemble 28 est uniquement constitué des deux pièces externes identiques 30 et 32, une fois que celles-ci sont fabriquées comme décrit ci-dessus, elles sont alors soudées entre-elles par diffusion, d'une manière analogue à celle rencontrée dans l'art antérieur pour effectuer l'assemblage des diverses pièces constitutives de la préforme. A cet égard et de façon connue, il est noté que l'opération de soudage par diffusion est précédée d'une opération de dépôt de barrières anti-diffusion suivant un motif déterminé, les barrières étant agencées au niveau des surfaces internes en contact 30a et 32a des pièces externes 30 et 32.

Parallèlement à la fabrication de l'ensemble creux 28 formant uniquement et intégralement la partie pale 18 de la préforme 14, il est également réalisé un élément additionnel unique 34, destiné à former uniquement et intégralement la partie pied 16 de cette même préforme 14. Ainsi, il est naturellement précisé que l'ensemble 28 et l'élément additionnel 34 disposent chacun d'une géométrie respectivement sensiblement identique à la géométrie de la partie pale 18 et de la partie pied 16 de la préforme 14 représentée sur la figure 2.

Comme cela est montré sur la figure 3b, l'élément additionnel 34 comporte donc une partie 36 d'épaisseur importante et similaire à la portion radiale interne 20 représentée sur la figure 2, ainsi qu'une partie 38 d'épaisseur plus faible similaire à la portion radiale externe 22 représentée sur cette même figure 2. L'élément 34 peut par conséquent facilement être fabriqué par filage/extrusion, cette technique éprouvée à faible coût consistant, à partir d'une billette de matière et au travers d'une filière appropriée, à réaliser un profil de l'élément additionnel 34 disposant de la géométrie désirée. De cette façon, avec une telle technique, il est possible de fabriquer des éléments additionnels 34 les uns à la suite des autres, par simple tranchage.

Lorsque l'ensemble 28 et l'élément additionnel 34 ont été simultanément réalisés, de préférence dans un alliage de titane, il est ensuite procédé à leur assemblage de manière à obtenir sensiblement la géométrie de la préforme 14, comme l'illustre la figure 3c.

Cet assemblage peut alors s'effectuer par soudage, en mettant en contact une surface radiale interne 40 de l'ensemble 28 avec une surface radiale externe 42 de l'élément additionnel 34. Ces surfaces 40 et 42 sont sensiblement planes et définissent conjointement une zone plane de contact 44, disposée sensiblement à un emplacement identique à celui du plan fictif de jonction P représenté sur la figure 2, par rapport aux parties de pied 16 et de pale 18 de la préforme 14.

A titre d'exemples indicatifs, l'opération d'assemblage de l'élément additionnel 34 sur l'ensemble 28 est préférentiellement réalisée par soudage par friction linéaire, ou par soudage par « friction stir welding ». Ces techniques de soudage connues permettent avantageusement à la zone soudée de conserver des caractéristiques métallurgiques compatibles avec la technique de soudage par diffusion et celle de gonflage superplastique, et assurent des propriétés mécaniques conformes aux spécifications de la préforme finie.

Bien entendu, cette opération de soudage peut être suivie d'une opération d'usinage de reconditionnement géométrique de la zone soudée.

Suite à l'étape de réalisation de la préforme d'aube 14 qui vient d'être décrite, il est ensuite procédé à des étapes classiques visant tout d'abord à mettre au profil aérodynamique la préforme 14, de manière à ce qu'elle dispose d'une forme sensiblement vrillée comme l'illustre la figure 3d. Ensuite, toujours de façon connue, une étape de gonflage par pression gazeuse et de formage superplastique permet d'obtenir l'aube 1 telle que celle représentée sur la figure 1, cette étape étant habituellement suivie par un usinage final destiné à donner à l'aube 1 rigoureusement le profil aérodynamique souhaité.

## Revendications

1. Procédé de fabrication d'une aube creuse (1) pour turbomachine comprenant un pied (2) et une pale (4), ledit procédé comprenant une étape de réalisation d'une préforme d'aube (14) disposant d'une partie pale (18) et d'une partie pied (16), l'étape de réalisation de la préforme (14) étant effectuée de façon à ce que celle-ci comporte un ensemble (28) d'au moins deux pièces (30,32) superposées et soudées entre-elles par diffusion, **caractérisé en ce que** l'étape de réalisation de ladite préforme d'aube (14) comprend les opérations suivantes :
- la fabrication dudit ensemble (28) d'au moins deux pièces (30,32) superposées et soudées entre-elles par diffusion, de manière à ce qu'il forme uniquement ladite partie pale (18) de la préforme (14),
- la fabrication d'un élément additionnel (34) destiné à former intégralement ladite partie pied (16) de la préforme (14), et
- l'assemblage de l'élément additionnel (34) sur l'ensemble (28) afin d'obtenir ladite préforme d'aube (14).

2. Procédé de fabrication selon la revendication 1, **caractérisé en ce que** l'opération d'assemblage de l'élément additionnel (34) sur ledit ensemble (28) est mise en oeuvre à l'aide d'une technique prise parmi le groupe constitué du soudage par friction linéaire, et du soudage par « friction stir welding ».

3. Procédé de fabrication selon la revendication 1 ou la revendication 2, **caractérisé en ce que** l'étape de réalisation de la préforme d'aube (14) est suivie des étapes suivantes :
- mise au profil aérodynamique de ladite préforme (14), et
- gonflage par pression gazeuse et formage superplastique de ladite préforme (14) mise au profil aérodynamique.

4. Procédé de fabrication selon l'une quelconque des revendications précédentes, **caractérisé en ce que** l'élément additionnel (34) destiné à former intégralement ladite partie pied (16) de la préforme (14) est réalisé par filage.

## Claims

1. Method of manufacturing a hollow blade (1) for turbine engine comprising a foot (2) and a rotor blade (4), said method comprising a production stage of the blade preform (14) bearing a rotor blade part (18) and a foot part (16), the production stage of the preform (14) being performed in such a way that it comprises a unit (28) of at least two parts (30, 32) stacked and diffusion bonded together, **characterised in that** the production stage of said blade preform (14) comprises the following operations:
- the making of said unit (28) of at least two parts (30, 32) stacked and diffusion bonded together, in such a way that they solely form said rotor blade part (18) of the preform (14);
- the making of an additional element (34) intended to wholly form said foot part (16) of the preform (14); and
- the assembling of the additional element (34) to the unit (28) so as to obtain said blade preform (14).

2. Manufacturing method set forth in claim 1, **characterised in that** the assembling operation of the additional element (34) to said unit (28) is implemented using a technique taken from among the group constituted of linear friction welding and of friction stir welding.

3. Manufacturing method set forth in claim 1 or claim 2, **characterised in that** the manufacturing stage of the blade preform (14) is followed by the following stages:
- airfoil profiling of said preform (14); and
- bulging via gas pressure and superplastic forming of said airfoil profiling preform (14).

4. Manufacturing method set forth in any one of the previous claims, **characterised in that** the additional element (34) intended to wholly form said foot part (16) of the preform (14) is made via extrusion.

## Patentansprüche

1. Verfahren zur Herstellung einer hohlen Schaufel für Turbotriebwerke mit einem Schaufelfuß (2) und einem Schaufelblatt (4), wobei dieses Verfahren einen Schritt zur Herstellung einer Schaufel-Vorform (14) umfasst, die über einen Schaufelblatt-Teil (18) und einen Schaufelfuß-Teil (16) verfügt, wobei der Schritt zur Herstellung der Vorform (14) dergestalt ausgeführt wird, dass diese eine Gesamtanordnung (28) von mindestens zwei Werkstücken (30, 32) umfasst, die übereinander gelegt und durch Diffusionsschweißen miteinander verschweißt werden,
**dadurch gekennzeichnet,**
**dass** der Verfahrensschritt zur Herstellung dieser Schaufel-Vorform (14) die folgenden Arbeitsvorgänge beinhaltet:
- die Fertigung der genannten Gesamtanordnung (28) von mindestens zwei Werkstücken (30, 32), die übereinander gelegt und durch Diffusionsschweißen miteinander verschweißt werden, so dass sie einzig den genannten Schaufelblatt-Teil (18) der Vorform (14) bildet,
- die Fertigung eines zusätzlichen Elements (34), das dazu bestimmt ist, zur Vervollständigung den genannten Schaufelfuß-Teil (16) der Vorform (14) zu bilden, und
- das Anfügen des zusätzlichen Elements (34) an der Gesamtanordnung (28), um diese Schaufel-Vorform (14) zu erhalten.

2. Herstellungsverfahren nach Anspruch 1,
**dadurch gekennzeichnet,**
**dass** der Arbeitsvorgang des Anfügens des zusätzlichen Elements (34) an der genannten Gesamtanordnung (28) mittels einer Technik erfolgt, die unter die Verfahrensgruppe des Linear-Reibschweißens und des "Stir-Welding"-Reibschweißens fällt.

3. Herstellungsverfahren nach Anspruch 1 oder 2,
**dadurch gekennzeichnet,**
**dass** auf den Verfahrensschritt zur Herstellung der Schaufel-Vorform (14) die folgenden Verfahrensschritte folgen:
- Herstellen des aerodynamischen Profils dieser Vorform (14), und
- Aufblähen durch Gasdruck und superplastisches Formen dieser mit dem aerodynamischen Profil versehenen Vorform (14).

4. Herstellungsverfahren nach einem der vorherigen Ansprüche,
**dadurch gekennzeichnet,**
**dass** das zusätzliche Element (34), das dazu bestimmt ist, zur Vervollständigung den genannten Schaufelfuß-Teil (16) der Vorform (14) zu bilden, durch Strangpressen hergestellt wird.
